# EUROPEAN PATENT APPLICATION

(11) **EP 2 933 772 A1**
(43) Date of publication of application: **21.10.2015**
(21) Application number: 12890131.1
(22) Date of filing: 28.12.2012
(51) Int. Cl.: G06Q 40/02, G06Q 20/40, G06Q 20/32

(54) **METHOD FOR GENERATING ONE-TIME CARD NUMBER**

(30) Priority: 12.12.2012 KR 20120144216
(71) Applicant: Shinhancard Co., Ltd., Seoul 100-709 (KR); KB Kookmincard Co., Ltd., Jongno-gu Seoul 110-719 (KR); Hyundai Card Co., Ltd., Seoul 150-872 (KR); Samsung Card Co., Ltd., Seoul 100-742 (KR); Lotte Card Co., Ltd., Seoul 100-778 (KR); Nonghyup Bank, Seoul 100-151 (KR)
(72) Inventor: PARK, Hae chul, Seoul 156-030 (KR); KIM, Byungsoo, Seoul 140-040 (KR); LEE, Jeongjin, Seoul 138-220 (KR)
(74) Representative: Thibon, Laurent
(86) International application number: PCT/KR2012/011699
(87) International publication number: WO 2014/092234

(57) **Abstract**

Provided is a method of generating one-time code that can enable credit payment with improved security to be carried out by enabling one-time code to be generated in a such a way that the one-time code issued to a payment device cannot be inferred or expected by other persons. The method of generating one-time code, which is performed by a card company server providing one-time codes to payment devices when one-time codes are requested by the payment devices, the method, comprising steps of: allocating the payment devices to an index table according to an order of one-time codes being requested when the one-time codes are requested from the payment devices; obtaining digit strings from a one-time code table having one-time codes using target addresses non-sequentially provided in an index table; and generating the one-time codes including the digit strings and a Bank Identification Number (BIN) in a published state.

## Description

### Technical Field

The present invention relates, in general, to a method of generating a one-time code and, more particularly, to a method of generating a one-time code that can enable payment to be carried out through payment devices, such as smart phones and portable cellar phones using one-time code in a mobile environment and can improve the security of payment through mobile means by enabling the one-time code to be generated in a such a way that the one-time code cannot be expected by other persons.

### Background Art

Generally, cash increases in volume in proportion to a sum of money necessary for payment, but in the case of a credit card, it is convenient to use the credit card, and there is also a convenience that payment can be performed by putting media in the form of a plastic card to be close to or to be connected to a card reader regardless of a payment amount.

The credit card is configured such that a digit string having 16 digits is embossed or depressed on a body portion made of a plastic or metal material, the digit string includes a BIN (Bank Identification Number), a card number and a CVC (Card Validation Code) value, and credit payment using only a card number and a valid date has been currently performed. Accordingly, there is a need to manage information on the card number or card validity so as not to be exposed to other persons, but the information on the card number or valid date may be decoded through a card reader which is connected or is closed to a relevant credit card, and may be exposed by a hacker or other persons during a payment process which is performed toward a card company's server via a relay server (e.g., a value added network (VAN) server) from the card reader.

With regard to this problem, Korean Laid-Open Patent Publication No. 10-2001-0112546 has suggested an electronic commerce system using a credit card, which is configured such that a temporary credit card number is used by adding a temporary credit card number generation server to an existing payment process leading to a credit card reader, a relay server and a card company server in order.

Korean Laid-Open Patent Publication No. 10-2001-0112546 discloses that when a request for a temporary credit card number is transmitted from a user terminal (a personal computer) to the temporary credit card number generation server, the temporary credit card number generation server sets a temporary card number, transmits the temporary credit card number to the card company server, and provides the transmitted temporary card number to the user terminal, thereby enabling electronic commerce to be performed using the temporary card number through the user terminal.

However, in Korean Laid-Open Patent Publication No. 10-2001-0112546, since the temporary credit card number generation server for issuing a temporary credit card number should be separately added to the existing payment process leading to the credit card reader, the relay server and the card company server, in order, and validity of the temporary credit card number which has been temporarily generated should be verified by the credit card company's server, the payment process may be delayed or may become complicated. Also, in Korean Laid-Open Patent Publication No. 10-2001-0112546, a method of generating a temporary credit card number has not been specified, and in this case, a method of allocating a digit string, which is sequentially generated, to the user terminal is generally used, and thus there is a possibility that the generated temporary credit card number will be inferred by hackers or other persons.

### Disclosure

### Technical Problem

Accordingly, an object of the present invention is to provide a method of generating one-time code which enables a user to perform credit payment with improved security by generating one-time code and using the same, wherein the one-time code is configured such that it is difficult for a third party to expect a numerical order and algorithm.

### Technical Solution

In order to accomplish the above object(s), the present invention provides a method of generating a one-time code, which is performed by a card company server providing a one-time code to a payment device when the one-time code is requested by the payment device connected to a wireless network, the method including steps of: allocating the payment device to an index table according to an order of the one-time code being requested when the one-time code is requested by the payment device; and obtaining a digit string from a one-time code table in which the one-time is provided using a target address provided in a non-sequential manner in the index table, wherein the one-time code includes the digit string and a bank identification number in a state of being published.

### Advantageous Effects

According to the present invention, a one-time code is issued to a payment device, and at this time, the issued one-time code is generated in such a way that it cannot not be inferred or expected by other persons so that credit payment having improved security can be performed.

### Description of Drawings

FIG. 1 illustrates a conceptual diagram for a method of generating a one-time code according to one embodiment of the present invention;
FIGS. 2 to 5 illustrate a reference view for a structure of the one-time code;
FIG. 6 illustrates a block diagram for one example of a server of a card company providing the one-time code;
FIGS. 7 and 8 illustrate reference views for one example of an operation verification check (OVC) method;
FIG. 9 illustrates a reference view for one example of the method of generating the one-time code;
FIG. 10 illustrates a reference view for one example in which an operations verification check (OVC) is generated.

| | | | |
|---|---|---|---|
| <10: Payment device> | | <50: Card reader> | |
| <100: Card company server> | | <200: Relay server> | |

### Best Mode

A payment device described in this specification may refer to a device which enables payment to be performed in a mobile environment. Such a device capable of enabling payment to be performed in the mobile environment may be devices such as mobile phones, smart phones, notebook computers, and PDAs (Personal Digital Assistants), but in addition to these devices, the device may be a device which can enable wireless communication to be performed, and can mount a USIM (Universal Subscriber Identity Module) chip or a financial chip in replacement of payment using a credit card in a financial company, and an electrical chip for other financial transactions.

A "credit card" mentioned in this specification may mean a credit card itself, or a portable terminal that transmits a code, or information equivalent to the code or capable of replacing the code in replacement of the credit card to a card reader. That is, the meaning of the credit card in this specification may refer to a magnetic credit card or an electronic card, and may also refer to a portable terminal which enables payment to be performed in a mobile environment, but the meaning should not be limited to a medium of a card form.

A relay server mentioned in this specification may refer to a server provided between a card reader and a card company server. Also, the relay server may refer to a POS (Point of Sales System) server that is network connected to a card company server or a VAN server. Also, the relay server may be a VAN (Value Added Network) server that collects and manages sales statements on behalf of each card company and checks information on the card companies through payment data transmitted from a card reader, providing the payment data to respective card company servers.

The card reader mentioned in this specification may be a card reader which reads information of track 2 from an existing MS (Magnetic Strip) credit card, a card reader which reads information of track 2 by accessing (or being close to) to an IC chip equipped in an existing electronic credit card, or a card read which obtains information of track 2 from a potable terminal by conducting a wireless local area network with the portable terminal, such as a cellular phone or a smart phone.

Accordingly, the card reader may mean a device that obtains information of track 2 in a standard of ISO/IEC 7813 by coming into contact with a magnetic credit card, or a device that reads disposable card information according to the present embodiment by connecting or being close to any one of an electronic credit card, a USIM chip, and a portable terminal in which a financial chip is equipped, transmitting the disposable card information to the card company server through the relay server.

The payment device in this specification may conduct wireless local area network with the card reader. To do so, the payment device may be configured such that a chip having a Near Field Communication (NFC) function is separately equipped in a portable terminal, or may be integrally formed with an USIM chip.

Hereinafter, the present invention will be described with reference to the drawings.

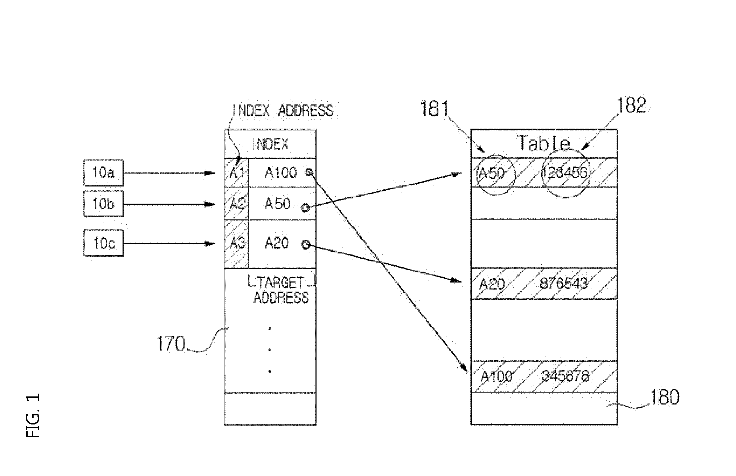

FIG. 1 illustrates a conceptual diagram for a method of generating one-time code according to one embodiment of the present invention.

Referring to FIG. 1, a method of generating one-time code according to the present embodiment of the invention is carried out by a card company server, and when payment devices 10a, 10b and 10c are connected to the card company server, the card company server may match the payment devices 10a, 10b and 10c with index addresses prepared in an index table 170. The index addresses corresponding to the payment devices 10a, 10b and 10c may be matched according to an order in which one-time code is requested by the payment devices 10a, 10b and 10c connected to the card company server. For example, the card company server may match the index addresses of the index table 170 with the payment devices 10a, 10b and 10c according to the order in which the payment devices 10a, 10b and 10c are connected to the card company server.

The index addresses in the index table 170 may be formed in such a way that addresses are provided in a form in which addresses monotonously increase on the basis of a starting address. The addresses themselves of the index table 170 are not irregular. However, target addresses provided in storage regions corresponding to the respective addresses of the index table 170 are irregular, and are difficult to be expected by other persons because target address values allocated to the respective payment devices 10a, 10b and 10c are different from each other even though the addresses of the index table 170 and the payment devices 10a, 10b and 10c are matched with each other in order.

The card company server may refer to the target addresses included as data of the index address after matching the payment devices 10a, 10b and 10c with the index table 170. The target addresses show addresses for a code table 180.

The target addresses for the code table 180 are included in the index table 170, and the target addresses included in the index table 170 are composed of different target addresses from each other without the same or repeated target addresses. That is, the target addresses, that are not identical to each other and are different from each other, are provided in the index table 170. Positions of the target addresses may be irregularly provided without following an arrangement order of the addresses of the index table 170.

For example, as data of the index addresses of the index table 170, the target addresses may be configured such that address values of Nos. A (Address) 100, A50 and A20 are provided in order. In the index table 170, the data of the first index address may have the address value of No. A100. The address value of No. A100 may refer to the target address of the one-time code table 180, and data of the second index address may designate the address value of No. A50 of the one-time code table 180 as the target address. As such, non-sequential and irregular target addresses may be arranged in the index table 170.

Accordingly, when the card company server selects the second index address after selecting the first address in the index table 170, the target address value (e.g. No. A50) recorded as the data of the index address which has been secondarily selected is very difficult to be expected by other persons (or financial management network staff). This is because it is irregular if a storage method for the target address values provided in the index table 170 has any pattern.

After the respective target addresses corresponding to the payment devices 10a, 10b and 10c have been selected in the index table 170, the card company server accesses to the target address of the one-time code table 180. The accessed target address may be provided with the index address of the index table 170 and one-time number (OTN). For example, when the address value of No. A100 is designated as the target address after the payment device 10a has been matched with the first index address of the index table 170, the card company server may select "345678" as a one-time number corresponding to the address value of No. A100 in the one-time code table 180 and may generate the one-time code including one-time number "345678."

At this time, the card company server may check actual card numbers corresponding to the payment devices 10a, 10b and 10c with reference to identifiers of the payment devices 10a, 10b and 10c, for example, telephone numbers, electrical serial numbers (ESN), universal unique identifiers (UUID) or MAC addresses, may extract bank identification numbers (BIN) included in the actual card numbers, may generate one-time codes including BINs + one-time numbers (OTN) + OVC (One-time Verification Code) and preliminary codes, and may provide the payment devices 10a, 10b and 10c with the generated one-time code.

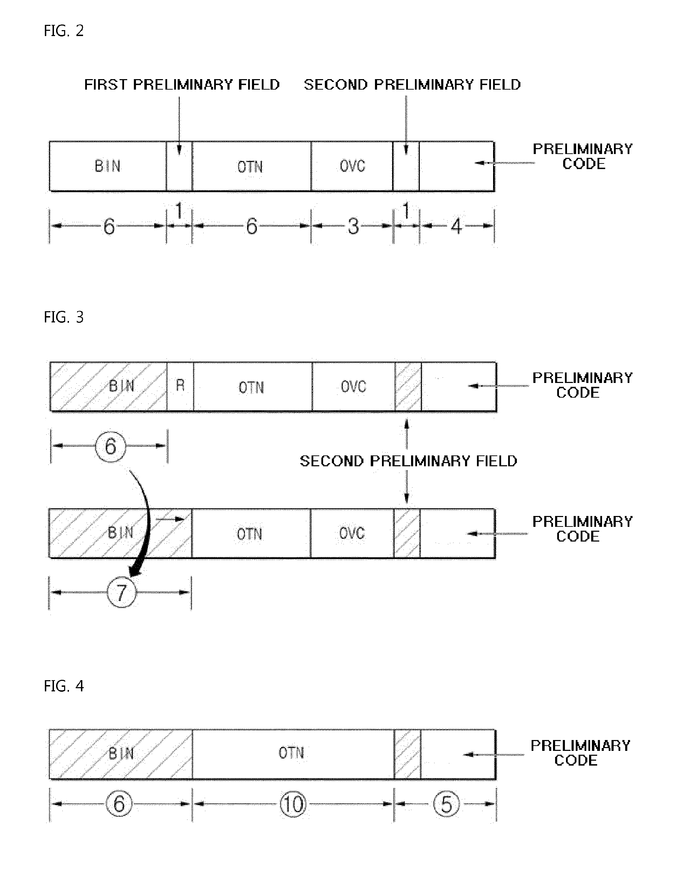

One-time codes may have a fixed field or may be implemented with a variable field. This will be described with reference to FIGS. 2 to 5.

First, referring to FIG. 2, a basic structure of one-time code may include a BIN of 6 digits, a first preliminary field of 1 digit, one-time number (OTN) of 6 digits, an OVC of 3 digits, a second preliminary field of 1 digit and a preliminary code of 4 digits.

The BIN (Bank Identification Number), which is a code which represents a card company, may be composed of 6 to 10 digits.

The OTN (One-time Number), which is a number obtained from the one-time code table 180, may be composed of 6 digits or may be formed in a field length of 6 digits or more. After the OTN has been matched with the index table 170 in the payment devices 10a, 10b and 10c, the OTN is matched with a number adopted in the one-time code table 180 with reference to the target address allocated by the index table 170. The OTN monotonously increases or does not monotonously decrease according to an address order of the one-time code table 180.

For example, when it is assumed that the target addresses of the one-time code table 180, namely, addresses values of Nos. A10, A11, A12, A13 and A14 are present in order, the one-time codes corresponding to the respective target addresses (A11, A12, A13 and A14)
may monotonously increase as 111111, 111112, 111113, 111114, and 111115,
may monotonously decrease as 111115, 111114, 111113, 111112, and 111111, or
may not be provided in a form in which they monotonously increase or monotonously decrease according to a regular rule (a rule of +3), as shown through 111111, 111114, 111117, 111120, and 111123.

That is, the one-time numbers provided in the one-time code table 180 monotonously increase, monotonously decrease, or have no digit strings which monotonously increase or monotonously decrease according to a regular rule. Also, it is preferable that the one-time codes be not generated in a form having a regular pattern based on a first linear function or a second function.

The OVC (One-time code Verification Code) is a verification value for a one-time number (OTN), and when a request for the provision of one-time codes including one-time numbers is transmitted from the payment devices, the OVC may be generated based on time information according to a time when the one-time code is requested by the payment devices 10a, 10b and 10c, an identifier (e.g., a UUID, MAC address, or phone number) of the payment devices 10a, 10b and 10c, a sub-region of an actual credit card number, and an order increase value as input values for the SHA algorithm. Here, the order increase value is a value in which +1 is increased whenever the OVC is generated, and a starting value may be randomly set by a system designer. The SHA algorithm uses a characteristic that the same result values are not derived when input values are different from each other. The SHA algorithm is characterized in that the same result values are not necessarily calculated when the same input values are input as input values.

A preliminary code may include additional service information or an affiliated company's card information.

This results from the fact that a one-time number (OTN) is an arbitrary number sequence corresponding to an actual card number, not card information itself, and when separate associated card information or additional service information is intended to be indicated, a preliminary code of 4 digits may be needed.

The additional service may be provided by indicating cards providing additional services in a form in which a point or a sum of money is maintained, such as a point saving card and an OK cash back card, and the kind of services of the corresponding cards using a preliminary code. Also, information on an associated card in a form in which a credit card's user is paid back a part of settlement fees may be recorded in the preliminary code.

The second preliminary field may be provided between the OVC and the preliminary code. In the second preliminary field, when more digits are needed in order to indicate the additional service or associated card information, the preliminary code of 4 digits may be replaced by the preliminary code of 5 digits. That is, the digits of the preliminary code may be increased from 4 digits to 5 digits. The description regarding the preliminary code and the second preliminary field is applied to the description which will be described hereinafter in the same way, and the repeated description will not be separately described.

Next, FIG. 3 illustrates one example in which the field of the BIN is extended by the preliminary field provided between the BIN and the one-time number (OTN).

As illustrated in FIG. 3, the preliminary field may be used in extending a field of the BIN and may enable the BIN having a field length of 6 digits to have a field length of 7 digits. When the field length has extended from 6 digits to 7 digits, the kinds of card companies or credit cards associated to the card companies, which can be indicated though the BIN, may be largely increased. Various kinds of credit cards released by the respective credit card company may be indicated using the preliminary field.

Next, FIG. 4 illustrates one example in which a field length of one-time number extends.

Referring to FIG. 4, a digit number of the OTN may be increased by allocating the fields allocated to the OVC except for the OVC for verifying one-time number (OTN) to the OTN. When the digit number of the OTN is increased, the number of one-time numbers which can be generated at a time may be increased. In FIG. 4, the OTN may have a field length of 10 digits and the preliminary field may be omitted.

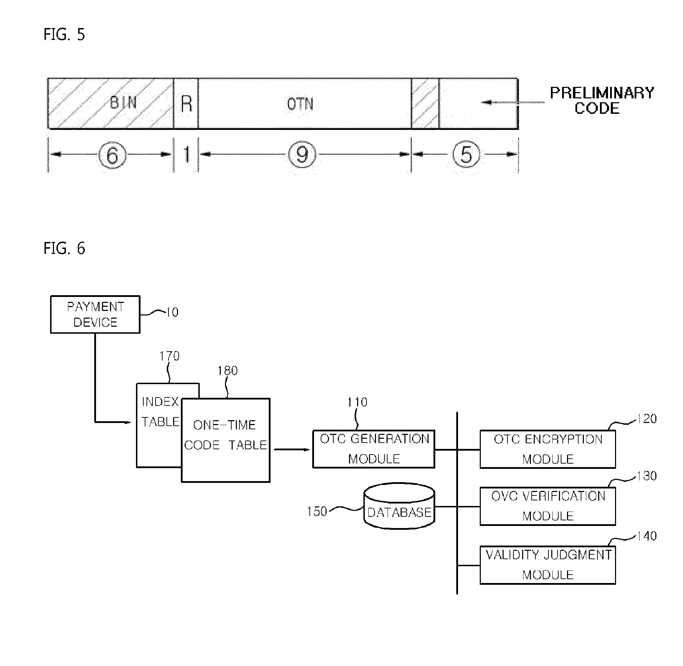

Next, FIG. 5 illustrates one example in which the preliminary field is maintained and the field length of the OTN is increased.

Referring to FIG. 5, a one-time code may be composed of: a BIN having a field length of 6 digits; a preliminary field having a field length of 1 digit; a one-time number (OTN) having a field length of 9 digits; and a preliminary code having a field length of 4 digits.

When the BIN is set as 6 digits, the field length of the BIN may extend as much as one digit by the preliminary field, and accordingly, the field length thereof may be set in a range of from at least 6 digits up to 7 digits. The OTN may have the field length of 9 digits, the OVC may be omitted, and the preliminary code may be composed of the field length of 4 digits.

Here, the preliminary codes illustrated in FIGS. 2 to 5 show examples in which all the preliminary codes have the field length of 4 digits, but the field length of the preliminary code may range from 2 digits to 5 digits.

FIG. 6 illustrates a block diagram for one example of a card company server generating one-time code.

Referring to FIG. 6, the card company server may include: the index table 170; the one-time code table 180; an OTC generation module 110; an OTC encryption module 120; an OVC verification module 130; a database 150; and a validity judgment module 140.

The OTC generation module 110 matches a payment device with an index address of the index table 170 when a request for the provision of a one-time code is transmitted from the payment device 10 to the card company server, and accesses to the one-time code table 180 according to a target address which is data of the index address. After the OTC generation module 110 has accessed the one-time code table 180, a one-time number (OTN) corresponding to the target address is obtained from the one-time code table 180, and a one-time code may be generated by adding a BIN, a preliminary field, an OVC and a preliminary code to the obtained OTN. At this time, the OTC generation module 110 may generate the OVC using an identifier of the payment device 10, time information on a time when the OTC is requested from the payment device 10, and a sub-region (e.g., BIN, OTC or the like) of an actual card number. The generated OVC may be included in the one-time code (OTC), and the one-time code including the OVC may be provided to the payment device 10.

At this time, the OVC may be recorded in the database 150. Also, the OVC may not be recorded in the database 150 and may have only information on factors required for generating the OVC, for example, time information on a time when the one-time code is requested from the payment device 10, and information on an identifier of the payment device 10 and the sub-region for an actual card number

Recorded information of the payment device 10 may be provided in the database 150. The recorded information of the payment device 10 may include the identifier of the payment device 10, for example, identifier information, such as a telephone number, ESN, UUID, and MAC address. The identifier may have actual card number information (e.g., a card number, a card holder's information, an application transaction count (ATC), and a payment amount limit of a credit card) which will be used in the payment device 10

Also, the database 150 may have the OVC, and factors necessary for generating the OVC. The detailed description regarding the OVC will be described in the section regarding the description of the OVC verification module later.

The OTC encryption module 120 may encode one-time code information using Advanced Encryption Standard (AES), Rivest Shamir Adleman (RSA), Data encryption standard (DES), Triple DES (TDES), Academy Research Institute Agency (ARIA) algorithms.

The OTC encryption module 120 may carry out encryption with respect to one-time number rather than the entire OTC. However, since the one-time number (OTN) itself is generated by the index table 170 and the one-time code table 180, an encryption process is not necessarily needed for the one-time number. That is, encryption for the OTC may be selectively performed.

The OVC verification module 130 may transmit the OTC to the payment device 10, and thereafter, may verify the OVC using the OTC included in a message for approval request returned by the relay server in payment processes leading to the payment device 10, the card reader, the relay server and the card company server in order

The message for approval request returned through the relay server is prepared in the card reader, the card reader combines the one-time code with the message for approval request, and OVC information is included in the OTC.

The OVC verification module 130 obtains the OVC from the one-time code returned through the relay server, and verifies whether or not the obtained OVC value is correct. The OVC verification module 130 may verify the OVC value according to any one of the following items.
1) The OVC verification module 130 may save OVC value-formation factors generated when the one-time code is transmitted from the card company server to the payment device 10, for example,
   - time information on a time when the one-time code is requested from the payment device 10,
   - an identifier of the payment device, and
   - sub-region information for an actual card number.

In this state, when the one-time code transmitted to the payment device 10 is returned through the relay server, the OVC may be extracted from the one-time code returned by the relay server, and the OVC value-formation factors saved in the database 150 may be searched based on the one-time number extracted from the one-time code.

That is, the card company server may check the OVC value-formation factors saved in the database 150 using the one-time number (OTN).

Then, the card company server may generate the OVC using the OVC value-formation factors and may verify the one-time code returned through the relay server by comparing whether or not the generated OVC is identical to the OVC included in the one-time code returned through the relay server.

On the other hand, 2) the card company server may save an OVC value in the database 150 and may verify the OVC value by comparing it with an OVC value extracted from the one-time code (OTC) returned through the relay server.

In this case, when the one-time code is transmitted from the card company server to the payment device 10, the OTC generation module 110 may save a copy of the OVC in the database 150.

The validity judgment module 140 judges whether or not a relevant credit card is available with reference to account information saved in the database 150, and at this time, judges whether or not a settlement fee included in the message for approval request exceeds a payment amount limit (for example, a daily use limit). As a result of judging, when the credit card satisfies a condition for the payment amount limit and is valid, approval information may be notified to the relay server.

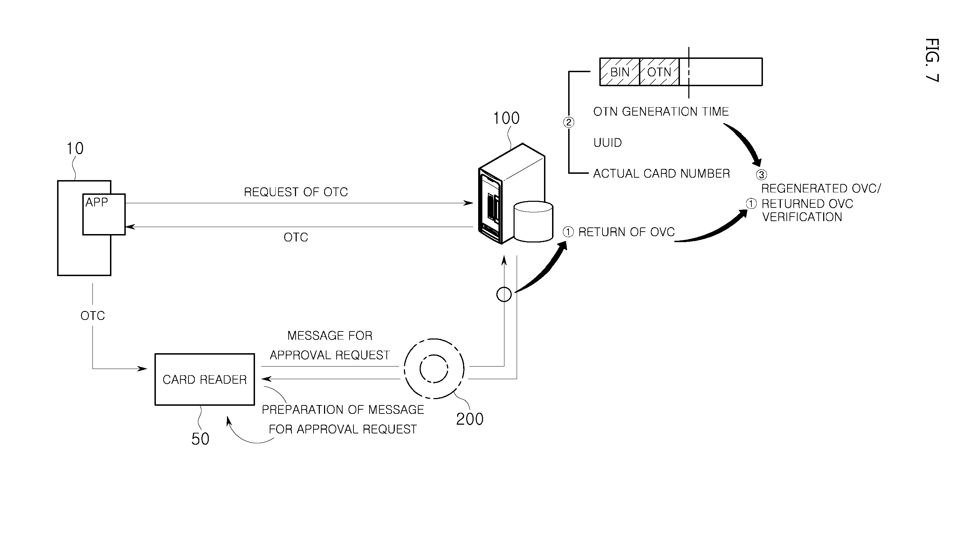

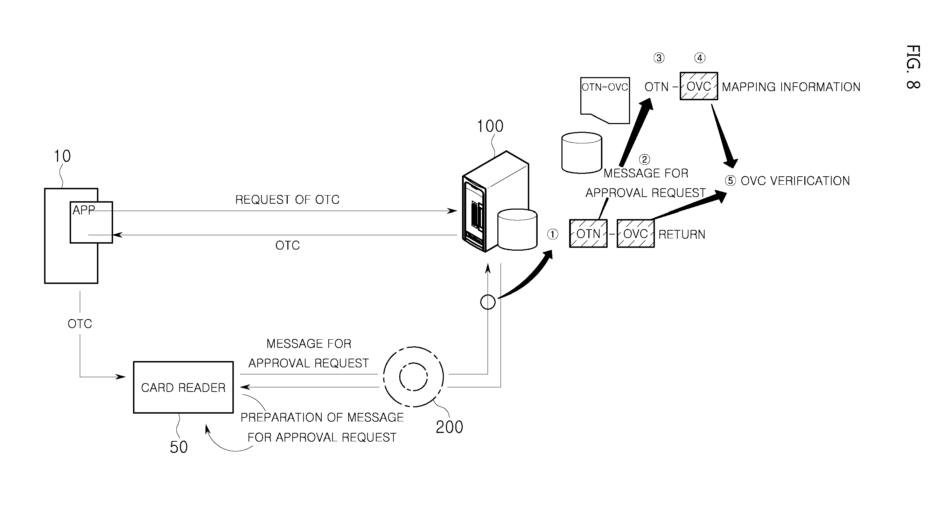

FIGS. 7 and 8 illustrate reference views for one example of an OVC verification method.

First, referring to FIG. 7, when one-time code (OTC) is requested from the payment device 10 to the card company server, the card company server 100 generates the one-time code including one-time number and an OVC (One-time Code Verification Code) according to the method explained based on FIG. 1, and provides the generated one-time code to the payment device 10.

The payment device 10 may transmit a request for payment by providing one-time code corresponding to an actual card number to the card reader 50, the card reader 50 may prepare a message for approval request including one-time code information on an affiliate and information on a settlement fee, and the prepared message for approval request is transmitted to the relay server 200, thereby requesting payment. With reference to a Bank Identification Number (BIN) among various kinds of information on the one-time code included in the transmitted message for approval request from the card reader 50, the relay server 200 may judge if the message for approval request should be transmitted to any card company server. As a result of the judgment, when an object to which the relay server 200 should transmit the message for approval request is the card company server 100, the message for approval request may be transmitted to the card company server 100.

The card company server 100 receives the message for approval request, and thereafter, obtains the one-time code included in the message for approval request, thereby extracting the OVC (One-Time Code Verification Code) included in the one-time code. By using the one-time number (OTN) included in the one-time code returned through the relay server 200, the card company server 100 may judge which one is the one-time code transmitted from the card company server to the payment device 10, and may check OVC formation factors of the generated OVC through the database 150 when the one-time code is transmitted to the payment device 10. After this, the card company server 100 may generate an OVC using the OVC formation factors and may verify the one-time code returned through the relay server 200 by comparing weather or not the generated OVC is identical to the OVC returned through the relay server 200.

Next, referring to FIG. 8, when a one-time code (OTC) is requested from the payment device 10 to the card company server 100, the card company server 100 generates a one-time code including a one-time number and an OVC according to the method explained based on FIG. 1, and provides the generated one-time code to the payment device 10. After this, the one-time code may be provided from the payment device 10 to the card reader 50, the card reader 50 may prepare a message for approval request including one-time code, information on an affiliate, and information on a settlement fee, and the message for approval request may be returned to the card company server 100 through the relay server 200.

The card company server 100 may extract the one-time number from the one-time code returned through the relay server 200 and may check the one-time number extracted from the database 150. The database 150 may be provided with OVC matching information saved by matching one-time numbers and OVCs, and the card company server 100 may verify the OVC returned through the relay server 200 using the OVC matching information.

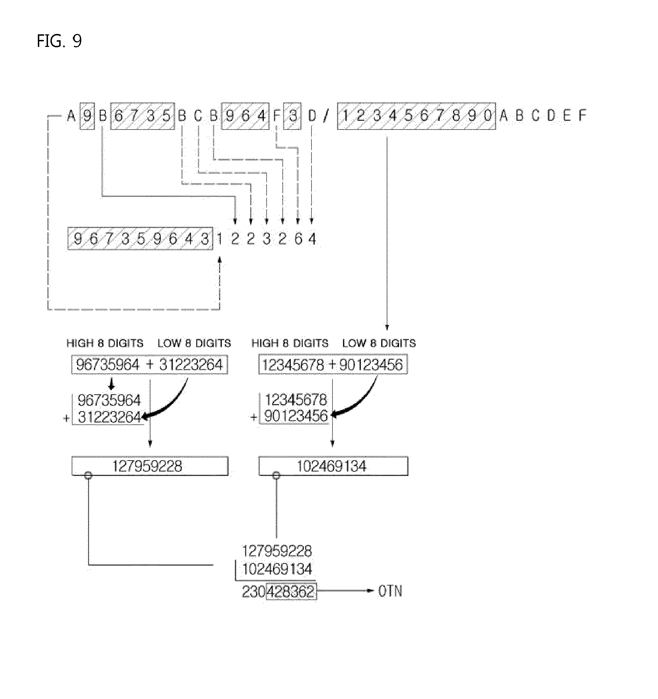

FIG. 9 illustrates a reference view of one example for a method of generating a one-time number.

Referring to FIG. 9, a one-time number may be generated in the card company server using a pair of hexadecimal code sequences composed of 16 digits.

In order to generate the one-time number, it is assumed that hexadecimal code sequences exist according to items:
3) A9B6735BCB964F3D - a first hexadecimal code sequence; and
4) 1234567890ABCDEF - a second hexadecimal code sequence.

Each of the first hexadecimal code sequence of item No. 3) and the second hexadecimal code sequence of item No. 4) is a hexadecimal code sequence and includes hexadecimal signs of A to F.

In order to indicate the hexadecimal signs (A to F) as decimal numbers,
when it is assumed that the signs are substituted according to a substitution rule that signs A, B, C, D, E and F are substituted by 1, 2, 3, 4, 5 and 6, respectively,
the first hexadecimal code sequence may be configured such that high digits are composed of digit strings, and low digits are put as the substituted, thereby enabling a first digit string to be generated. For example, the first hexadecimal code sequence may be configured such that

A9B6735BCB964F3D is changed to 9673596431223264 (the first digit string) and the second hexadecimal code sequence may be configured such that
1234567890ABCDEF is changed to 1234567890123456 (the second digit string).

Here, the first digit string and the second digit string may be divided to the same two digit numbers, for example,
5) the first digit string: 96735964 / 31223264, and
6) the second digit string: 12345678 / 90123456.

Addition of the high digits 96735964 plus low digits 31223264 resulting from dividing the first digit string according to digit numbers makes a first additive value, such as 127959228.

Furthermore, Addition of the high digits 12345678 plus low digits 90123456 resulting from dividing the first digit string according to digit numbers makes a second additive value, such as 102469134.

After this, addition of the first additive value plus the second additive value makes a value of "230428362," when three high digits are removed from the generated value, six digits of "428362" remain. The remaining six digits of "428362" becomes a one-time number (OTN).

Here, a one-time code (OTC) results from adding a BIN, a preliminary field, an OVC and a preliminary code to the one-time number.

One-time numbers generated according to the processes above are non-sequentially and irregularly arranged in a storage region of the one-time code table 180. Accordingly, in the one-time numbers (OTN) irregularly arranged in the one-time code table 180, there is neither relation between a firstly issued one-time number and a secondly issued one-time number nor basis to infer any algorithm, and accordingly, the one-time numbers cannot be expected by other persons.

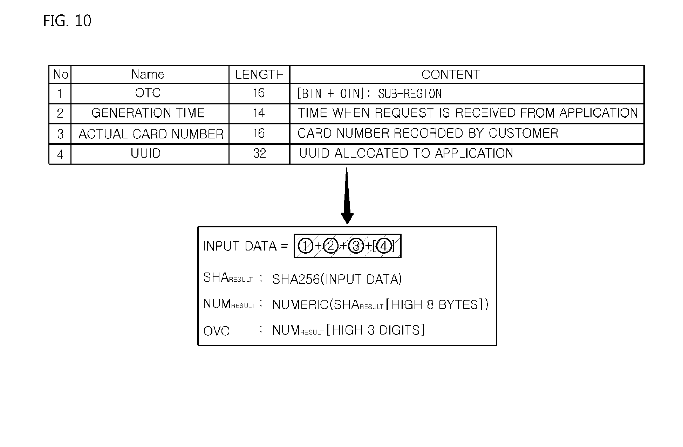

FIG. 10 illustrates a reference view for one example showing the generation of an OVC (One-Time Code Verification Code.

Referring to FIG. 10, the OVC, which is a factor for SHA2 (Secure Hash Algorithm 2) algorithm (EX: SHA-256 algorithm), may be generated using
5) an OTC sub-region,
6) a generation time,
7) an actual card number, and
8) a UUID.

Here, the OTC sub-region may mean a region corresponding to the BIN and OTN of the OTC and the data of the sub-region may be used as an input value of the SHA-2 algorithm.

Here, the generation time may mean a time when a one-time code is requested from the payment device 10 to the card company server 100.

Here, the actual card number may mean an entire or a part of card numbers having 16 digits embossed or depressed on an actual credit card.

Here, the UUID is an identifier of the payment device 10, and in addition to the UUID, a MAC address, a telephone number, and an electrical serial number (ESN) value may be used in replacement of the UUID. Here, the UUID, which is the identifier of the payment device 10, may not be used as an input value for the SHA algorithm. In this case, the input values used for the generation of the OVC may be the sub-region, the generation time and the actual card number.

In order to generate the OVC, the card company server 100 may calculate the addition of values of items 5), 6), 7), and 8), or
may use a value resulting from the addition of values of items 5), 6), and 7) as the input value for the SHA algorithm. Then, the high 8 digits of the value generated in the SHA algorithm are substituted by numbers, and among resulting values of the SHA algorithm including the substituted numbers, only the highest 3 digits are adopted so as to be used as the OVC. Here, a substation rule may be based on the substation rule as explained based on FIG. 9: A, B, C, D, E, and F are substituted by 1, 2, 3, 4, 5 and 6, respectively.

### Industrial Applicability

According to the present invention, a one-time code, which cannot be inferred by other persons, may be generated upon issuance of the one-time code, and accordingly, a method of generating the one-time code according to the present invention can contribute to the revitalization of financial security companies providing a security solution for financial transactions, and financial companies, such as card companies or banks supporting credit transactions.

## Claims

1. A method of generating one-time code, which is performed by a card company server providing one-time codes to payment devices when one-time codes are requested by the payment devices, the method, comprising steps of:
allocating the payment devices to an index table according to an order of one-time codes being requested when the one-time codes are requested from the payment devices,
obtaining digit strings from a one-time code table having one-time codes using target addresses non-sequentially provided in an index table; and
generating the one-time codes including the digit strings and a Bank Identification Number (BIN) in a published state.

2. The method of claim 1, wherein the index table has target addresses different from each other.

3. The method of claim 1, wherein values of the target addresses exclude digit strings which monotonously increase or monotonously decrease compared to those of addresses of the index table.

4. The method of claim 1, wherein the values of the target addresses are irregularly arranged without following an order of the addresses of the index table, and the same values of the target addresses do not exist in the index table.

5. The method of claim 1, wherein the one-time code table comprises a digit string of 6 digits as a one-time number.

6. The method of claim 5, wherein the one-time code comprises a Bank Identification Number (BIN), the one-time number and a preliminary code corresponding to an affiliated company.

7. The method of claim 6, wherein the preliminary code comprises any one of information on additional services and card information of an affiliated company.

8. The method of claim 6, wherein the one-time code is provided between the BIN and the one-time number, and further comprises a preliminary field for the extension of data field of the BIN.

9. The method of claim 1, wherein the one-time number is generated by a Secure Has Standard (SHA) algorithm, factors of which are generation time information at the time of generating the one-time number, a system ID provided by the card company server, a temporary initial vector, and an order increase value which increases whenever one-time numbers are generated.

10. The method of claim 1, wherein the one-time number is generated using a first hexadecimal code sequence and a second hexadecimal code sequence formed in hexadecimal number as temporary digit strings,
high digits in each of the first hexadecimal code sequence and a second hexadecimal code sequence are composed of only numbers, and low digits generate a first digit string and a second digit string generated by substituting hexadecimal values with decimal values, and
the addition of a first additive value, which is the addition of values generated by dividing the first digit string into two, and a second additive value, which is the addition of values generated by dividing the second digit string into two makes a value, and then a digit string which is obtained from removing high 3 digits from the value becomes the one-time number.

11. The method of claim 10, wherein the first digit string and the second digit string generate digit strings composed of only numbers by matching hexadecimal signs of A to F included in the first hexadecimal code sequence and the second hexadecimal code sequence with 1 to 6.

12. The method of claim 1, wherein the one-time code further comprises a One-time Verification Code (OVC) for verification of the one-time code, wherein the OVC is generated based on Secure Hash Standard (SHA) algorithm factors including a sub-region of the one-time code composed of a bank identification number and the one-time number, information on a request time when the one-time code is requested by the payment device, and an actual card number.

13. The method of claim 12, wherein the OVC is generated by an SHA (Secure Hash Standard) algorithm, the factors of which are the sub-region, the information on the request time, and the actual card number.

14. The method of claim 13, wherein the factors further comprise a Universally Unique Identifier (UUID).
